# FASCICULE DE BREVET EUROPEEN

(11) **EP 2 000 732 B1**
(45) Date de publication et mention de la délivrance du brevet: **20.01.2010**
(21) Numéro de dépôt: 08290523.3
(22) Date de dépôt: 06.06.2008
(51) Int. Cl.: F16L 55/34

(54) **Robot destiné à déplacer un colis dans une conduite d'enfouissement**
Roboter zum Verschieben eines Behälters in einer Beseitigungsleitung
Robot intended for moving a parcel in a burying conduit

(30) Priorité: 08.06.2007 FR 0755612
(43) Date de publication de la demande: 10.12.2008
(73) Titulaire: Constructions Industrielles de la Méditerranée - CNIM, 75008 Paris (FR)
(72) Inventeur: Lidou, Pierre, 83190 Ollioules (FR)
(74) Mandataire: Thinat, Michel

(56) Documents cités:
- DE-A1- 19 708 001
- FR-A- 2 638 699
- US-A- 4 848 168
- US-A- 5 791 255

## Description

L'invention concerne un robot destiné à déplacer un colis dans une conduite d'enfouissement.

L'enfouissement d'un tel colis est effectué en introduisant le colis dans la conduite, puis en introduisant le robot qui pousse le colis le long de cette conduite, depuis l'embouchure jusqu'au fond de cette conduite pour l'y entreposer.

Le colis qui contient typiquement des déchets nucléaires, a une forme circulaire et a une masse d'environ deux tonnes pour 1,6 m de long. La conduite fait partie d'un ensemble de galeries souterraines horizontales, creusées à environ 500 m sous terre, et dont les parois sont couvertes d'une gaine, constituée de portions de tubes en acier dont le diamètre interne vaut environ 620 mm.

L'invention propose une architecture de robot capable de déplacer un tel colis dans une telle conduite.

Dans ce cadre, l'invention a pour objet un robot destiné à déplacer un colis dans une conduite d'enfouissement, ce robot comprenant une partie avant et une partie arrière reliées l'une à l'autre par un actionneur central apte à rapprocher et à éloigner ces parties l'une de l'autre, la partie avant et la partie arrière ayant chacune un contour circulaire pourvu d'un vérin torique, tel qu'un joint torique gonflable, chaque partie pouvant être bloquée dans la conduite par gonflage de son vérin torique, et ce robot comprenant une unité hydraulique embarquée apte à gonfler et à dégonfler le vérin torique avant et le vérin torique arrière avec un liquide ainsi qu'une unité de commande de l'unité hydraulique et de l'actionneur central.

Grâce à cette architecture, la progression du robot est assurée en commandant successivement le gonflage du vérin torique arrière, l'allongement de l'actionneur central, le gonflage du vérin torique avant et le dégonflage du vérin torique arrière, puis la rétractation de l'actionneur central et le dégonflage du vérin torique avant.

L'invention concerne également un robot tel que défini ci-dessus dans lequel l'unité hydraulique comprend une seringue hydraulique et un actionneur de gonflage apte à déplacer la tige de cette seringue hydraulique, un circuit hydraulique reliant une chambre de la seringue hydraulique au vérin torique avant et au vérin torique arrière, deux électrovannes aptes à ouvrir et fermer la communication entre la chambre de la seringue et respectivement le vérin torique avant et le vérin torique arrière.

L'invention concerne également un robot tel que défini ci-dessus, comprenant deux seringues hydrauliques ayant leurs tiges solidarisées à un palonnier solidarisé à une partie mobile de l'actionneur de gonflage, et dans lequel les deux seringues hydrauliques ont chacune une chambre reliée au circuit hydraulique.

L'invention concerne également un robot tel que défini ci-dessus, comprenant un circuit de sécurité équipé d'une troisième électrovanne pour relier chaque chambre variable à l'air libre afin de la dépressuriser en cas de défaillance du robot.

L'invention concerne également un robot tel que défini ci-dessus, dans lequel le circuit hydraulique est équipé d'un accumulateur de pression pour maintenir ce circuit hydraulique à une pression prédéterminée.

L'invention concerne également un robot tel que défini ci-dessus comprenant un organe d'accrochage du colis, cet organe équipant la partie avant du robot.

L'invention sera maintenant décrite plus en détail, et en référence aux figures annexées.
La figure 1 représente une vue schématique du robot selon l'invention dans une conduite d'enfouissement ;
La figure 2 est une vue schématique du robot selon l'invention, les parties avant et arrière étant éloignées ;
La figure 3 est une vue schématique du robot de l'invention, montrant les parties avant et arrière rapprochées après déplacement dans la conduite ; et

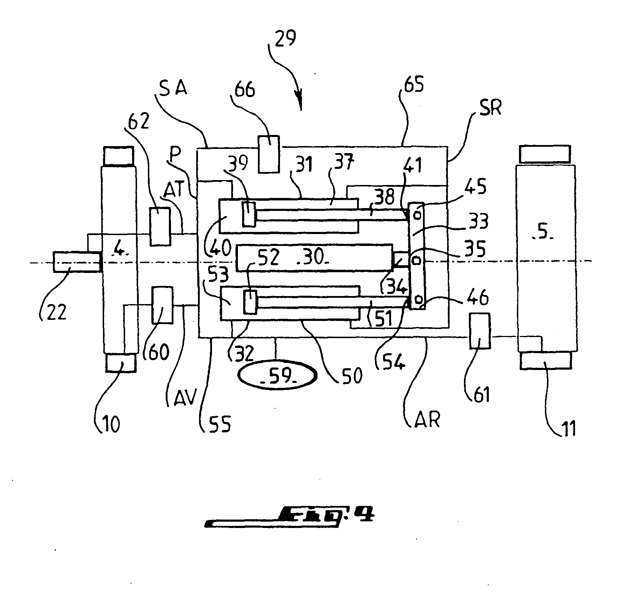

La figure 4 est une représentation schématique d'une unité hydraulique du robot selon l'invention.

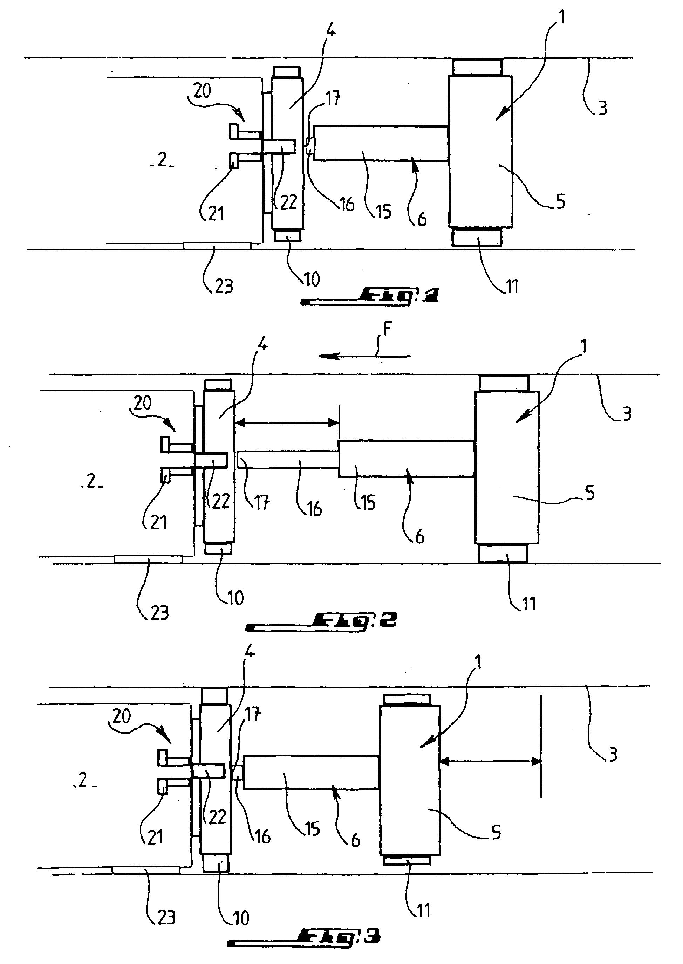

Comme représenté aux figures 1 à 3, le robot 1 comprend une partie avant 4 et une partie arrière 5, solidarisées l'une à l'autre par l'intermédiaire d'un actionneur central 6, apte à les rapprocher ou à les éloigner. Ces parties sont liées l'une à l'autre par une liaison de type glissière non représentée.

La partie avant 4 du robot 1 a un contour circulaire pourvu d'un vérin torique 10 flexible. Ce vérin torique 10 se présente sous la forme d'un joint torique qui peut être gonflé ou dégonflé, de sorte que, gonflé, il se trouve en appui sur la paroi interne cylindrique de la conduite 3, ce qui immobilise la partie avant 4 par rapport à cette conduite. Au contraire, quand il est dégonflé, la partie avant 4 peut être déplacée longitudinalement dans la conduite 3.

De manière analogue, la partie arrière 5 du robot présente un contour circulaire muni d'un vérin torique 11, flexible. Ce vérin 11, de la forme d'un joint torique gonflable, est du même type que le vérin 10, et peut être gonflé pour immobiliser la partie arrière 5 dans la conduite, ou dégonflé pour qu'elle soit déplaçable dans cette conduite.

Les vérins toriques 10 et 11 sont remplis de liquide, ils sont gonflés et dégonflés par une unité hydraulique.

L'actionneur central 6 comprend un corps de vérin électrique 15 alimenté par un câble électrique, et qui actionne une partie mobile 16 de la forme d'une tige, orientée selon l'axe de la conduite 3. La position de la tige 16 est comprise entre une position dans laquelle elle est rentrée dans le corps de vérin 15, seule son extrémité libre 17 dépassant de ce corps, et une position sortie pour laquelle toute la longueur de la tige dépasse du corps 15.

Ainsi la longueur de l'ensemble de l'actionnéur 6 est variable, en étant comprise entre une longueur minimale quand la tige est dans la position rentrée, comme visible aux figures 1 et 3, et une longueur maximale quand la tige est dans la position de sortie, comme visible à la figure 2.

L'actionneur central 6 est solidarisé aux parties avant et arrière, 4 et 5, l'extrémité libre 17 de la tige 16 étant solidaire de la partie avant 4, et le vérin 15 étant solidaire de la partie arrière 5.

De la sorte, la distance entre les parties avant et arrière 4 et 5 dépend de la longueur de l'actionneur 16 ; elle est minimale quand la tige est rentrée et maximale quand la tige est en position sortie.

Le déplacement du robot 1 le long de la conduite d'enfouissement 3 est réalisé en plusieurs étapes.

Tout d'abord, comme visible à la figure 1, le vérin torique 11 est gonflé, ce qui immobilise la partie arrière 5 dans la conduite, tandis que le vérin torique avant 10 est dégonflé, permettant le déplacement de la partie avant 4.

Ensuite, le vérin électrique 15 commande le déplacement de la tige 16, depuis sa position rentrée, jusqu'à sa position complètement sortie. La partie avant 5 est alors poussée par la tige 16 et se déplace vers le fond de la conduite 3 d'une longueur sensiblement égale à la longueur de la tige 16. Ce déplacement se fait dans le sens d'une flèche F visible à la figure 2.

Puis, comme illustré à la figure 3, le vérin torique avant 10 est gonflé, bloquant la partie avant 4, tandis que le vérin arrière 11 est dégonflé.

Alors, le vérin électrique 15 rétracte la tige 16 depuis la position sortie jusqu'à la position complètement rentrée. La partie arrière 5 étant solidaire de l'actionneur 6, ce mouvement de la tige tire la partie arrière 5 qui se déplace à son tour vers le fond de la conduite 3, dans le sens de la flèche F.

Ainsi, le robot 1 s'est déplacé vers le fond de la conduite 3, d'une longueur sensiblement égale à la longueur de la tige 16.

Les étapes décrites précédemment se succèdent, permettant un déplacement pas à pas du système, c'est-à-dire un déplacement de type « chenille », jusqu'à ce que le robot 1 ait atteint l'endroit dans la conduite 3 où le colis 2 doit être entreposé.

Le robot 1 comprend également un organe d'accrochage 20 du colis 2. Cet organe 20 comporte un grappin 21 fixé à la partie avant 4, et qui permet de saisir le colis 2, en étant actionné par un vérin d'attache 22, de type hydraulique. Le vérin d'attache 22 peut être gonflé ou dégonflé, et commande le dessaisissement du colis lorsqu'il est gonflé.

Le colis 2 est muni de patins 23, par exemple en céramique, qui réduisent le coefficient de frottement de façon à diminuer l'effort nécessaire pour pousser le colis 2.

Le robot 1 est accroché à un treuil situé à l'embouchure de la conduite 3, et qui permet de ramener ce robot 1 en cas de panne, par l'intermédiaire d'un câble en acier.

Le robot 1 comprend une unité hydraulique 29 embarquée, apte à gonfler et à dégonfler avec un liquide le vérin torique avant 10, le vérin arrière 11 et le vérin d'attache 22. Ce liquide est par exemple de l'eau glycolée.

L'unité hydraulique 29 comprend un actionneur électrique de gonflage 30, et deux seringues hydrauliques 31 et 32 solidarisées l'une à l'autre par un palonnier 33.

L'actionneur de gonflage 30 comporte une partie mobile 34 de la forme d'une tige, dont l'extrémité libre 35 est solidarisée au centre du palonnier 33, ce palonnier étant orienté sensiblement perpendiculairement à la direction de la tige 34.

La première seringue 31 est un vérin hydraulique comprenant un corps cylindrique 37, une tige mobile 38 et un piston 39 délimitant une chambre 40 à volume variable, ou chambre de travail. Le volume de la chambre 40 dépend de la position de la tige 38 entraînant le piston 39. L'extrémité libre 41 de la tige est solidaire de l'extrémité 45 du palonnier 33.

De la même façon, la seconde seringue 32 est un vérin hydraulique comprenant un corps cylindrique 50, une tige mobile 51 et un piston 52 délimitant une chambre de travail 53 dont le volume dépend de la position de la tige 51. L'extrémité libre 54 de la tige est solidaire de l'extrémité 46 du palonnier 33.

Les tiges 38 et 51 des deux seringues hydrauliques 31 et 32 sont orientées parallèlement à la direction de la partie mobile 34 de l'actionneur de gonflage 30, le palonnier 33 étant donc orthogonal à l'ensemble des trois tiges 34, 38 et 51.

Les déplacements des tiges 38 et 51 sont simultanés, du fait que le déplacement de la tige 34 de l'actionneur de gonflage 30 provoque celui du palonnier 33 qui entraîne à son tour les tiges 38 et 51.

Un circuit hydraulique 55 relie les chambres 40 et 53 au vérin torique avant 10, au vérin torique arrière 11, et au vérin d'attache 22. Il comporte une branche principale P reliant la chambre 40 à la chambre 53, une branche avant AV reliant la branche principale P au vérin torique avant 10, une branche arrière AR reliant la branche principale P au vérin torique arrière 11, et une branche d'attache AT reliant la branche principale P au vérin d'attache 22.

L'unité hydraulique 29 comprend également trois électrovannes 60, 61 et 62 équipant respectivement les branches AV, AT, et AR, et qui sont pilotées lors de la progression du robot dans la conduite.

L'électrovanne 60 permet d'ouvrir et fermer la communication entre les chambres 40 et 53 des seringues 31 et 32 et le vérin torique avant 10. L'électrovanne 61 permet d'ouvrir et fermer la communication entre les chambres 40 et 53 des seringues 31 et 32 et le vérin torique arrière 11. L'électrovanne 62 permet d'ouvrir et fermer la communication entre la branche principale P et le vérin d'attache 22.

Un accumulateur de pression 59, relié au circuit 55 par la branche arrière AR, permet de maintenir une pression prédéterminée dans le circuit hydraulique 55, de l'ordre de 7 bar. Il se présente par exemple sous la forme d'une bouteille en acier contenant du liquide et comportant une vessie dans laquelle est enfermé de l'azote sous pression. Si le circuit 55 subit une chute de pression, le volume de la vessie augmente, ce qui expulse du liquide hors de la bouteille vers la branche arrière AR du circuit 55. La pression prédéterminée est alors rétablie.

Enfin, l'unité hydraulique 29 est pourvue d'un circuit de sécurité 65, équipé d'une électrovanne de sécurité 66 qui permet lorsqu'elle est ouverte de dépressuriser l'ensemble du circuit hydraulique, notamment pour dégonfler les vérins toriques avant et arrière 10 et 11. Le circuit de sécurité 65 comporte une branche avant SA qui relie la branche principale P à l'électrovanne de sécurité 66 et une branche arrière SR qui relie les seringues hydrauliques 31 et 32 à l'électrovanne 66.

Le fonctionnement de l'unité hydraulique 29 de l'invention va maintenant être décrit dans le cas du gonflage et du dégonflage du vérin torique avant 10, le gonflage et le dégonflage du vérin torique arrière 11, et/ou du vérin d'attache 22 étant réalisés de façon similaire.

Tout d'abord, on ouvre l'électrovanne 60 du vérin avant 10, et on ferme les électrovannes 61 et 62 du vérin arrière 11 et du vérin d'attache 22.

Puis, l'actionneur de gonflage 30 tire la tige mobile 34 vers l'intérieur de l'actionneur 30. Le palonnier 33 étant solidaire de la tige 34, il se déplace en se rapprochant de l'actionneur 30. Alors, la tige 38 est entraînée vers le fond du corps cylindrique 37 de la seringue hydraulique 31, réduisant le volume de la chambre de travail 40. De même, concomitamment, la tige 51 se déplace vers le fond du corps 50, et le volume de la chambre 53 est réduit.

Le liquide sous pression est expulsé des chambres 40 et 53, et introduit dans le circuit hydraulique 55 dans lequel il s'écoule jusqu'au vérin avant 10 qu'il pénètre et gonfle progressivement.

Une fois le gonflage achevé, l'électrovanne 60 est fermée, empêchant que le vérin torique 10 ne se dégonfle.

Pour dégonfler le vérin torique avant 10, il faut dans un premier temps procéder à l'ouverture de l'électrovanne 60, les électrovannes 61 et 62 étant fermées.

Puis, la partie mobile 34 s'éloigne de l'actionneur de gonflage 30, poussant le palonnier 33 et les tiges 38 et 51 solidaires du palonnier 33. Le volume des chambres 40 et 53 augmentant, le liquide emmagasiné dans le vérin 10 est transféré progressivement dans les chambres 40 et 53 par l'intermédiaire du circuit 55.

Une fois le dégonflage achevé, on ferme l'électrovanne 60.

Pour déposer le colis 2, le vérin d'attache 22 est gonflé comme expliqué précédemment, ce qui permet au grappin 21 de détacher le colis 2 du robot 1.

En cas de panne, le robot 1 est rapatrié à l'embouchure de la conduite 3 par le treuil 25, les vérins toriques 10 et 11, et le vérin d'attache 22 ayant été préalablement dégonflés grâce au circuit de sécurité 65 en ouvrant simplement l'électrovanne de sécurité 66 et les autres électrovannes du circuit.

Dans cette situation, le liquide en surpression dans le circuit se vide par la partie arrière SR du circuit de sécurité 65. Dans l'exemple illustré sur les figures, le liquide se vide dans les parties des corps des seringues 31 et 32 opposées à leurs chambres de travail, mais il pourrait aussi bien être vidé ailleurs.

Les vérins étant ainsi dégonflés, le robot peut être ramené grâce au treuil auquel il est relié par un câble.

Le robot est alimenté électriquement par un câble électrique qui le suit le long de la conduite, et qui est relié à une source électrique située hors de la conduite, par exemple à son embouchure.

Durant la progression du robot dans la conduite, une unité de commande dirige l'ouverture et la fermeture des électrovannes et des actionneurs électriques conformément au cycle indiqué plus haut. Cette unité peut être embarquée dans le robot et reliée à l'extérieur de l'embouchure par un câble de commande pouvant être intégré au câble d'alimentation électrique, le robot étant alors piloté depuis un poste situé hors de la conduite.

Grâce au choix d'une unité hydraulique qui est embarquée dans le robot, celui-ci est relié à une partie externe de la conduite simplement par un câble électrique, un câble de commande, et un câble mécanique de treuillage. Ces câbles peuvent ainsi avoir une longueur importante tout en offrant une très faible résistance à l'avancement du robot dans la conduite.

Grâce au grappin 21 commandable à distance, le robot peut également être piloté pour aller récupérer un colis qui a été préalablement entreposé en extrémité d'une conduite. Dans ce cas, le robot est déplacé jusqu'au fond de la conduite, accroche le colis à sa partie avant, et le ramène à l'embouchure.

Le robot de l'invention peut avantageusement déplacer plusieurs colis à la fois.

Selon une variante de réalisation, le robot 1 est équipé d'une seule seringue hydraulique 31, dont le déplacement de la tige mobile 38 est commandé par l'actionneur de gonflage 30.

## Revendications

1. Robot (1) destiné à déplacer un colis (2) dans une conduite d'enfouissement (3), ce robot (1) comprenant une partie avant (4) et une partie arrière (5) reliées l'une à l'autre par un actionneur central (6) apte à rapprocher et à éloigner ces parties l'une de l'autre, la partie avant (4) et la partie arrière (5) ayant chacune un contour circulaire pourvu d'un vérin torique (10, 11), tel qu'un joint torique gonflable, chaque partie pouvant être bloquée dans la conduite par gonflage de son vérin torique (10, 11), ce robot comprenant une unité hydraulique embarquée (29) apte à gonfler et à dégonfler le vérin torique avant (10) et le vérin torique arrière (11) avec un liquide, et une unité de commande de l'unité hydraulique (29) et de l'actionneur central (6).

2. Robot (1) selon la revendication 1, dans lequel l'unité hydraulique (29) comprend une seringue hydraulique (31) et un actionneur de gonflage (30) apte à déplacer la tige (38) de cette seringue hydraulique (31), un circuit hydraulique (55) reliant une chambre (40) de la seringue hydraulique (31) au vérin torique avant (10) et au vérin torique arrière (11), deux électrovannes (61, 62) aptes à ouvrir et fermer la communication entre la chambre (40) de la seringue et respectivement le vérin torique avant (10) et le vérin torique arrière (11).

3. Robot (1) selon la revendication 2, comprenant deux seringues hydrauliques (31, 32) ayant leurs tiges (38, 51) solidarisées à un palonnier (33) solidarisé à une partie mobile (34) de l'actionneur de gonflage (30), et dans lequel les deux seringues hydrauliques (31, 32) ont chacune une chambre (40, 53) reliée au circuit hydraulique (55).

4. Robot (1) selon la revendication 2 ou 3, comprenant un circuit de sécurité (65) équipé d'une troisième électrovanne (66) pour relier chaque chambre (40, 53) variable à l'air libre afin de la dépressuriser en cas de défaillance du robot (1).

5. Robot (1) selon l'une des revendications précédentes, dans lequel le circuit hydraulique (55) est équipé d'un accumulateur de pression (60) pour maintenir ce circuit hydraulique (55) à une pression prédéterminée.

6. Robot (1) selon l'une des revendications précédentes, comprenant un organe d'accrochage (20) du colis (2), cet organe (20) équipant la partie avant (4) du robot (1).

7. Robot selon la revendication 6, dans lequel l'organe d'accrochage (20) comporte un moyen de préhension (21) actionné par un vérin d'attache (22) apte à être gonflé ou dégonflé par l'unité hydraulique (29).

8. Robot selon l'une quelconque des revendications précédentes, dans lequel l'actionneur électrique (6) comprend un vérin électrique (15) qui actionne une partie mobile (16) entre une position rentrée dans laquelle la distance entre les parties avant (4) et arrière (5) est minimale et une position sortie dans laquelle la distance entre les parties avant (4) et arrière est maximale.

## Claims

1. A robot (1) for moving a package (2) inside a burying conduit (3), said robot (1) comprising a front part (4) and a rear part (5) connected to each other by a center actuator (6) capable of driving said parts together and apart, with the front part (4) and the rear part (5) each having a circular outline provided with a toric cylinder (10, 11), such as an inflatable O-ring, each part capable of being blocked inside the conduit by inflating the toric cylinder (10, 11) thereof, said robot comprising an onboard hydraulic unit (29) capable of inflating and deflating the front toric cylinder (10) and the rear toric cylinder (11) with liquid, and a control unit of the hydraulic unit (29) and the center actuator (6).

2. The robot (1) according to claim 1, wherein the hydraulic unit (29) comprises a hydraulic syringe (31) and an inflating actuator (30) capable of moving the rod (38) of said hydraulic syringe (31), a hydraulic circuit (55) connecting a chamber (40) of the hydraulic syringe (31) to the front toric cylinder (10) and the rear toric cylinder (11), two solenoid valves (61, 62) capable of opening and closing communication between the chamber (40) of the syringe and respectively the front toric cylinder (10) and the rear toric cylinder (11).

3. The robot (1) according to claim 2, comprising two hydraulic syringes (31, 32) having the rods (38, 51) thereof made integral with a spreader (33) made integral with a moving part (34) of the inflating actuator (30), and wherein both hydraulic syringes (31, 32) each have one chamber (40, 53) connected to the hydraulic circuit (55).

4. The robot (1) according to claim 2 or 3, comprising a fail-safe circuit (65) fitted with a third solenoid valve (66) for connecting each variable chamber (40, 53) to the open air in order to depressurize said chamber in case of failure of the robot (1).

5. The robot (1) according to any of the preceding claims, wherein the hydraulic circuit (55) is fitted with a pressure accumulator (60) for maintaining said hydraulic circuit (55) at a predetermined pressure.

6. The robot (1) according to any of the preceding claims, comprising a member (20) for securing the package (2), said member (20) being fitted to the front part (4) of the robot (1).

7. The robot according to claim 6, wherein the securing member (20) comprises a gripping means (21) actuated by a fastening cylinder (22) capable of being inflated and deflated by the hydraulic unit (29).

8. The robot according to any of the preceding claims, wherein the electric actuator (6) comprises an electric cylinder (15) actuating a moving part (16) between a retracted position, in which the distance between the front (4) and rear (5) parts is at a minimum, and an extracted position, in which the distance between the front (4) and rear parts is at a maximum.

## Patentansprüche

1. Roboter (1) zum Verschieben eines Behälters (2) in einer Beseitigungsleitung (3), wobei dieser Roboter (1) einen vorderen Teil (4) und einen hinteren Teil (5) umfasst, die über ein zentrales Stellglied (6) miteinander verbunden sind, das in der Lage ist, diese Teile zusammen- und auseinanderzubringen, wobei der vordere Teil (4) und der hintere Teil (5) jeweils eine kreisförmige Außenlinie aufweisen, die mit einem torischen Zylinder (10, 11), wie etwa einem auffüllbaren O-Ring, versehen ist, wobei jeder Teil durch das Auffüllen seines torischen Zylinders (10, 11) in der Leitung blockiert werden kann, wobei dieser Roboter eine Bordhydraulikeinheit (29), die in der Lage ist, den vorderen torischen Zylinder (10) und den hinteren torischen Zylinder (11) mit einer Flüssigkeit aufzufüllen und diese zu entleeren, und eine Steuereinheit der Hydraulikeinheit (29) und des zentralen Stellglieds (6) umfasst.

2. Roboter (1) nach Anspruch 1, wobei die Hydraulikeinheit (29) eine hydraulische Spritze (31) und ein Auffüllstellglied (30), das in der Lage ist, den Stempel (38) dieser hydraulische Spritze (31) zu verschieben, wobei ein Hydraulikkreislauf (55) eine Kammer (40) der hydraulische Spritze (31) mit dem vorderen torischen Zylinder (10) und dem hinteren torischen Zylinder (11) verbindet, zwei Elektroventile (61, 62), die in der Lage sind, die Verbindung zwischen der Kammer (40) der Spritze und jeweils dem vorderen torischen Zylinder (10) und dem hinteren torischen Zylinder (11) zu öffnen, umfasst.

3. Roboter (1) nach Anspruch 2, umfassend zwei hydraulische Spritzen (31, 32), deren Stempel (38, 51) mit einer Traverse (33) fest verbunden sind, die mit einem beweglichen Teil (34) des Auffüllstellglieds (30) fest verbunden ist, und wobei die beiden hydraulischen Spritzen (31, 32) jeweils über eine Kammer (40, 53) verfügen, die mit dem Hydraulikkreislauf (55) verbunden ist.

4. Roboter (1) nach Anspruch 2 oder 3, umfassend eine Sicherheitsschaltung (65), die mit einem dritten Elektroventil (66) ausgestattet ist, um jede variable Kammer (40, 53) mit dem Freien zu verbinden, um sie im Falle eines Versagens des Roboters (1) drucklos zu machen.

5. Roboter (1) nach einem der vorhergehenden Ansprüche, wobei der Hydraulikkreislauf (55) mit einem Druckspeicher (60) ausgestattet ist, um diesen Hydraulikkreislauf (55) auf einem vorherbestimmten Druck zu halten.

6. Roboter (1) nach einem der vorhergehenden Ansprüche, umfassend ein Organ zum Aufhängen (20) des Behälters (2), wobei dieses Organ (20) den vorderen Teil (4) des Roboters (1) ausstattet.

7. Roboter nach Anspruch 6, wobei das Aufhängorgan (20) ein Greifmittel (21) umfasst, das von einem Befestigungszylinder (22) betätigt wird, der von der Hydraulikeinheit (29) aufgefüllt oder entleert werden kann.

8. Roboter nach einem der vorhergehenden Ansprüche, wobei das elektrische Stellglied (6) einen elektrischen Zylinder (15) umfasst, der einen beweglichen Teil (16) zwischen einer eingezogenen Position, in welcher der Abstand zwischen den vorderen (4) und hinteren (5) Teilen minimal ist, und einer ausgefahrenen Position, in welcher der Abstand zwischen den vorderen (4) und hinteren Teilen maximal ist, betätigt.
